# EUROPÄISCHE PATENTSCHRIFT

(11) **EP 2 551 569 B1**
(45) Veröffentlichungstag und Bekanntmachung des Hinweises auf die Patenterteilung: **15.01.2014**
(21) Anmeldenummer: 12175941.9
(22) Anmeldetag: 11.07.2012
(51) Int. Cl.: F16K 31/00, F16K 11/07

(54) **Thermostatventil**
Thermostat valve
Soupape thermostatique

(30) Priorität: 25.07.2011 DE 102011079759
(43) Veröffentlichungstag der Anmeldung: 30.01.2013
(73) Patentinhaber: MAHLE International GmbH, 70376 Stuttgart (DE)
(72) Erfinder: Stange, Frank, 72649 Wolfschlugen (DE)
(74) Vertreter: BRP Renaud & Partner

(56) Entgegenhaltungen:
- WO-A1-2007/093093
- DE-A1- 4 223 358
- DE-A1-102008 059 806
- US-A- 3 738 571

## Beschreibung

Die vorliegende Erfindung betrifft ein Thermostatventil für ein Kühlsystem einer Brennkraftmaschine, insbesondere in einem Kraftfahrzeug, gemäß dem Oberbegriff des Anspruchs 1. Ein Thermostatventil gemäß dem Oberbegriff des Anspruchs 1 wurde bereits in Dokument WO 2007/093093 offenbart. Die Erfindung betrifft außerdem ein Kühlsystem mit einem derartigen Thermostatventil.

Aus der EP 1 752 628 B1 ist ein gattungsgemäßes Thermostatventil für einen Schmierölkreislauf bei einem Verbrennungsmotor eines Kraftfahrzeugs bekannt. Das Thermostatventil besitzt einen Körper, der einen axialen Einlass aufweist sowie einen in diesen Körper in Axialrichtung temperaturabhängig verstellbaren Schieber. Je nach Stellung des Schiebers in dem Körper wird dabei der Einlass über den entsprechenden Auslass mit einer Wärmetauchereinheit bzw. mit einer Umgehungsleitung verbunden. Eine Verstellung des Schiebers wird dabei über ein Wachsdehnelement verbunden, das dem zu regelnden Strom ausgesetzt ist.

Nachteilig bei dem aus dem Stand der Technik bekannten Thermostatventil ist, dass sowohl die Umgehungsleitung (Bypassleitung) als auch die Wärmetauschereinheit über den jeweils radialen Auslass versorgt werden, wodurch nur vergleichsweise geringe Volumenströme oder hohe Volumenströme nur bei gleichzeitig hohem Widerstand realisierbar sind.

Die vorliegende Erfindung beschäftigt sich daher mit dem Problem für ein Thermostatventil der gattungsgemäßen Art eine verbesserte oder zumindest eine alternative Ausführungsform anzugeben, die insbesondere eine widerstandsarme Bypassströmung bei gleichzeitig hohem Massenstrom erlaubt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Thermostatventil für ein Kühlsystem einer Brennkraftmaschine einen, einen in Axialrichtung verschiebbaren Schieber aufnehmenden Körper derart auszubilden, dass dieser einen axialen Einlass sowie zwei radiale Auslässe und einen axialen Auslass aufweist, wobei der axiale Auslass zur Realisierung einer vergleichsweise widerstandsarmen Bypassströmung genutzt wird. Der Schieber ist dabei temperaturabhängig in bekannter Weise in Axialrichtung in dem Körper verstellbar, wobei zusätzlich der erste und der axial dazu beabstandete zweite radiale Auslass auf einer ersten Mantelhalbfläche des Körpers angeordnet sind. Auf der zweiten Mantelhalbfläche hingegen weist der erfindungsgemäße Körper eine radiale Bypassöffnung auf. Zusätzlich besitzt der Körper zwei Ringdichtungen, zwischen welchen die beiden Auslässe und die Bypassöffnung angeordnet sind. Neben den genannten Ringdichtungen weist der Körper erfindungsgemäß zusätzlich zwei Axialdichtungen auf, die in Axialrichtung entlang der Mantelfläche verlaufen und die beiden Mantelhalbflächen gegeneinander und damit die Bypassöffnung gegen die beiden radialen Auslässe abdichten. Hierdurch wird der Bypass somit auf der zweiten Mantelhalbfläche realisiert, wogegen auf der ersten Mantelhalbfläche die beiden radialen Auslässe zur Kommunikation mit beispielsweise einem Ölkühler vorgesehen sind. Um den Ölkühler umgehen zu können, wird der Schieber in genau diejenige Stellung gestellt, in welcher die Bypassöffnung geöffnet und dadurch der axiale Einlass mit dem axialen Auslass verbunden ist. Durch die hierdurch entstehende und im Wesentlichen widerstandsfreie Strömung kann insbesondere ein die Kühleinrichtung beispielsweise einen Ölkühler umgehende Bypassströmung mit vergleichsweise hohem Massenstrom und gleichzeitig geringem Strömungswiderstand realisieren werden. Zur Verstellung des Schiebers innerhalb dem Körper und sind in bekannter Weise eine Feder und ein Wachsdehnelement vorgesehen, zwischen welchen der Schieber angeordnet ist. Bei einer Erhöhung der Temperatur dehnt sich das Wachsdehnelement aus und drückt den Schieber entgegen der Feder, wobei bei einer Reduzierung der Temperatur sich das Wachsdehnelement wieder zurückzieht und dadurch die Feder den Schieber entgegen dem Wachsdehnelement verstellt. Mit einem derartigen Wachsdehnelement ist ein selbsttätiges und temperaturabhängiges Verstellen des Schiebers bei einer Temperaturerhöhung möglich, wohingegen die Feder das Zurückverstellen des Schiebers bei einer Temperaturerniedrigung ermöglicht.

Bei einer vorteilhaften Weiterbildung der erfindungsgemäßen Lösung weist der Schieber eine erste und eine zweite Steuerkante auf, wovon die erste Steuerkante den ersten radialen Auslass und die zweite Steuerkante den zweiten radialen Auslass und zugleich die Bypassöffnung öffnet bzw. schließt. Die beiden Steuerkanten sind dabei in der Art von ringförmigen Kolben ausgebildet, die über ein dazwischen angeordnetes Verbindungsglied miteinander verbunden sind, so dass ein Verstellen der ersten Steuerkante ein gleichgerichtetes und gleichgroßes Verstellen der zweiten Steuerkante bedingt. Durch ein Verschieben des Schiebers in Axialrichtung innerhalb dem Körper kann somit bei einer Temperatur von bis zu ca. 90° der erste radiale Auslass geöffnet, der zweite radiale Auslass und die Bypassöffnung verschlossen werden. In diesem Stadium strömt somit 100% des das Thermostatventil durchströmenden Massenstroms über den Wärmetauscher, beispielsweise einen Ölkühler, der jedoch aufgrund der schnelleren Erwärmung des Kühlmittels in diesem Temperaturbereich ein Erwärmen des Öls bewirkt. Bei einer Temperatur von ca. 90-100°C wird der Schieber vom Wachsdehnelement derart weiterverstellt, dass er den zweiten radialen Auslass verschließt, den ersten radialen Auslass teilweise, beispielsweise zu 50%, öffnet, ebenso wie die Bypassöffnung, so dass in diesem Fall ein Teilmassenstrom über den Ölkühler und ein Teilmassenstrom über die Bypassöffnung zum axialen Auslass strömt. Bei einer Temperatur zwischen 100 und 120°C besitzt das zu kühlende Fluid seine optimale Betriebstemperatur, so dass in diesem Fall sowohl der erste radiale Auslass als auch der zweite radiale Auslass geschlossen sind und der gesamte Massenstrom über die Bypassöffnung zum axialen Auslass geleitet wird. In diesem Fall wird somit der Wärmetauscher/Ölkühler komplett umgangen. Bei einer Temperatur von 120-130° hingegen wird der Schieber weiter verstellt, wobei dann der zweite radiale Auslass zumindest teilweise geöffnet und die Bypassöffnung hinsichtlich ihres Durchlassquerschnitts reduziert werden. In diesem Temperaturbereich findet somit wieder ein Aufteilen des Massenstroms über den zweiten radialen Auslass zum Wärmetauscher/Ölkühler und über die Bypassöffnung und den axialen Auslass zum Schmiermittelreservoir statt. Steigt die Temperatur des zu kühlenden Fluids, beispielsweise des Ölkühlers, dagegen über 130°C, so wird die Bypassöffnung von der zweiten Steuerkante verschlossen, wobei die zweite Steuerkante in diesem Zustand zugleich den zweiten radialen Auslass komplett öffnet, so dass der komplette Massenstrom nunmehr über den Ölkühler, das heißt generell ein Wärmetauscher, strömt und dort gekühlt werden kann.

Mit dem erfindungsgemäßen Thermostatventil ist es somit möglich, ein einerseits konstruktiv einfach aufgebautes Thermostatventil mit lediglich zwei Steuerkanten zu schaffen, welches zugleich insbesondere für eine Bypassströmung einen vergleichsweise hohen Massenstrom bei gleichzeitig vergleichsweise geringem Strömungswiderstand schafft.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Thermostatventil in einer Ansicht auf eine obere Mantelhalbfläche,
- Fig. 2: eine Schnittdarstellung durch ein eingebautes erfindungsgemäßes Thermostatventil bei einer Temperatur von bis zu ca. 90°,
- Fig. 3: eine Darstellung wie in Fig. 2, jedoch bei einer Temperatur von ca. 90-100°C,
- Fig. 4: eine Darstellung wie in Fig. 2, jedoch bei einer Temperatur von ca. 100-120°C,
- Fig. 5: eine Darstellung wie in Fig. 2, jedoch bei einer Temperatur von ca. 120-130°C,
- Fig. 6: eine Darstellung wie in Fig. 2, jedoch bei einer Temperatur von über 130°C.

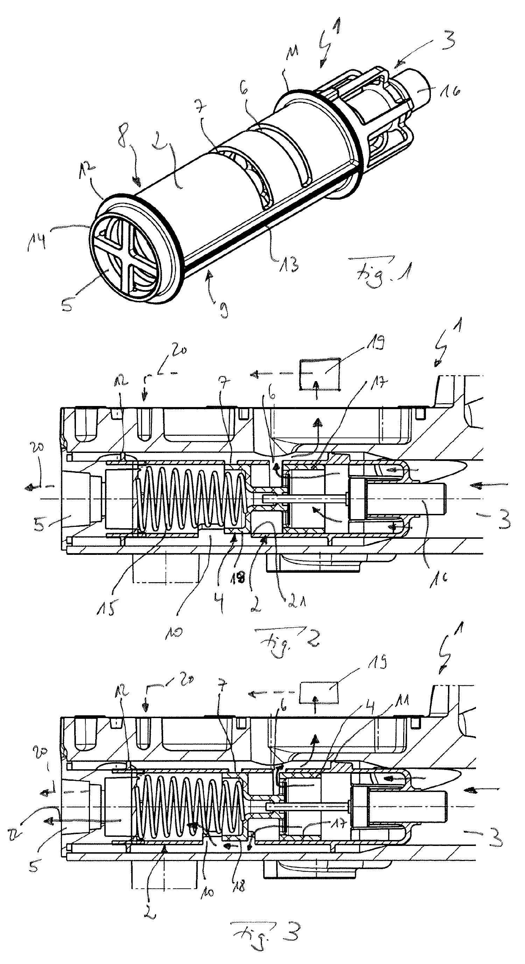

Entsprechend den Figuren 1-6, weist ein erfindungsgemäßes Thermostatventil 1 für ein nicht näher gezeigtes Kühlsystem einer Brennkraftmaschine, insbesondere in einem Kraftfahrzeug, einen Körper 2 auf, der einen axialen Einlass 3 sowie einen in diesem Körper 2 in Axialrichtung temperaturabhängig verstellbaren Schieber 4 besitzt. Der Körper 2 weist darüber hinaus einen axialen Auslass 5 sowie einen ersten radialen Auslass 6 und einen axial dazu beabstandeten zweiten radialen Auslass 7 auf, die beide auf einer ersten Mantelhalbfläche 8 angeordnet sind. Auf der der ersten Mantelhalbfläche 8 gegenüberliegenden zweiten Mantelhalbfläche 9 hingegen weist der Körper 2 eine radiale Bypassöffnung 10 auf (vgl. insbesondere Figuren 2-6). Zusätzlich besitzt der Körper 2 zwei Ringdichtungen 11 und 12, zwischen welchen die beiden radialen Auslässe 6 und 7 sowie die Bypassöffnung 11 angeordnet sind. Ebenso besitzt der Körper 2 zwei Axialdichtungen 13 und 14, die in Axialrichtung entlang der Mantelfläche verlaufen und die beiden Mantelhalbflächen 8, 9 gegeneinander und damit die Bypassöffnung 10 gegen die beiden radialen Auslässe 6 und 7 abdichten.

Betrachtet man die Figuren 2-6, so kann man erkennen, dass der Schieber 4 zwischen einerseits einer Feder 15 und andererseits einem Wachsdehnelement 16 angeordnet ist und mittels dieser beiden Bauteile temperaturabhängig verschoben wird. Zusätzlich besitzt der Schieber 4 eine erste Steuerkante 17 sowie eine zweite Steuerkante 18, wovon die erste Steuerkante 17 den ersten radialen Auslass 6 und die zweite Steuerkante 18 den zweiten radialen Auslass 7 und die Bypassöffnung 10 öffnet bzw. verschließt. Dabei weist die zweite Steuerkante 18 eine geringere Axialerstreckung auf als die Bypassöffnung 10, so dass die zweite Steuerkante 18 beim Überfahren der Bypassöffnung 10 eine Bypassströmung ermöglicht. Sowohl der Körper 2 als auch der Schieber 4 können beispielsweise als kostengünstige Kunststoffspritzgussteile ausgebildet sein.

Im Folgenden sollen nun die einzelnen Steuerstellungen des erfindungsgemäßen Thermostatventils 1 in Abhängigkeit unterschiedlicher Temperaturen erläutert werden:
Gemäß der Figur 2 ist ein Zustand dargestellt, bei welchem die Temperatur des durch das Thermostatventil 1 strömenden Fluids unterhalb von ca. 90°C liegt. Bis zu dieser Temperatur öffnet der Schieber 4 mit seiner ersten Steuerkante 17 den ersten radialen Auslass 6 und verschließt mit seiner zweiten Steuerkante 18 den zweiten radialen Auslass 7 und unterbindet zugleich durch ein Verschließen der Bypassöffnung 10 eine Bypassströmung. Der erste radiale Auslass 6 sowie der zweite radiale Auslass 7 stehen dabei mit einem Wärmetauscher 19, beispielsweise einem Ölkühler, in Kontakt, so dass bei der gemäß der Figur 2 dargestellten Schieberstellung der gesamte über den Einlass 3 strömende Fluidstrom an den Ölkühler bzw. den Wärmetauscher 19 umgelenkt wird. Von diesem strömt ein Fluidstrom 20 über den Auslass 5 zurück zu einem Fluidreservoir, beispielsweise einem Schmierstoff- oder Ölreservoir. Die zweite Ringdichtung 12 verhindert dabei ein unerwünschtes Austreten von Fluid über den ersten radialen Auslass 6 direkt hin zum axialen Auslass 5. Das Verschließen der Bypassöffnung 10 auf der zweiten Mantelhalbfläche 9 erfolgt über ein Anliegen der zweiten Steuerkante 18 an einer Kante 21 des Körpers 2. Ein Strömen des Fluides von dem ersten radialen Auslass 6 hin zur Bypassöffnung 10 auf der gegenüberliegenden zweiten Mantelhalbfläche 9 wird durch die beiden Axialdichtungen 13 und 14, die die beiden Mantelhalbflächen 8 und 9 voneinander trennen, unterbunden.

Bis zu einer Temperatur von ca. 90°C wird das durch das Thermostatventil 1 strömende Fluid im Wärmetauscher 19 nicht gekühlt, sondern von diesem erwärmt, da sich das Wärmetauschermedium/Kühlmittel im Wärmetauscher 19 üblicherweise schneller erwärmt als das durch das Thermostatventil 1 strömende Fluid, beispielsweise Öl. In diesem Fall dient somit der Wärmetauscher 19 als Heizer.

Gemäß der Figur 3 ist der Schieber 4 bei einer Temperatur von ca. 90-100°C gezeigt, bei welcher er den ersten radialen Auslass 6 teilweise öffnet, den zweiten radialen Auslass 7 verschließt und gleichzeitig über die Bypassöffnung 10 eine Bypassströmung ermöglicht. Bei dieser Schieberstellung wird somit der am Einlass 3 ankommende Massenstrom aufgeteilt in einen über den Wärmetauscher 19 strömenden Teilstrom sowie einen direkt über die Bypassöffnung 10 zum Ausgang 5 strömenden Teilstrom. Eine Aufteilung kann dabei beispielsweise 50% betragen. Je nach Schieberstellung kann diese Aufteilung jedoch variieren.

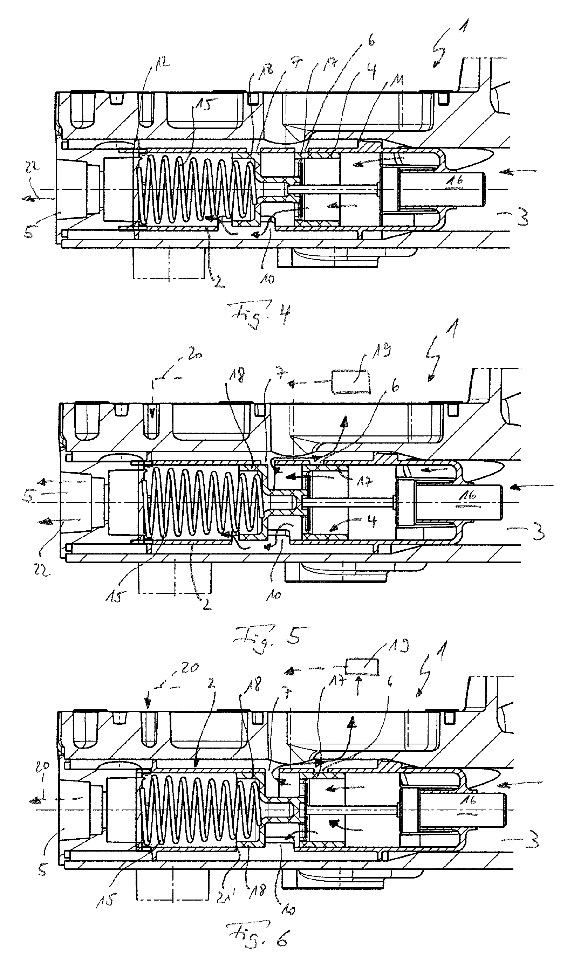

Betrachtet man die Figur 4, so kann man den Schieber 4 bei einer Temperatur zwischen 100°C und 120°C erkennen, bei welcher er sowohl den ersten radialen Auslass 6 als auch den zweiten radialen Auslass 7 verschließt und zugleich die Bypassöffnung 10 öffnet, so dass bei dieser Darstellung der gesamte über den Einlass 3 einströmende Massenstrom direkt in Axialrichtung das Thermostatventil 1 über den axialen Auslass 5 wieder verlässt.

Betrachtet man die Figur 5, so erkennt man den Schieber 4 bei einer Temperatur zwischen 120 und 130°C, bei welcher er den ersten Auslass 6 schließt und den zweiten radialen Auslass 7 sowie die Bypassöffnung 10 öffnet. Bei dieser Temperatur strömt somit wiederum ein Teilstrom 20 über den Wärmetauscher 19 und ein anderer Teilstrom 22 über die Bypassöffnung 10 direkt zum axialen Ausgang 5.

In Figur 6 schließlich ist der Schieber 4 bei einer Temperatur von über 130°C gezeigt, bei welcher er die Bypassöffnung durch Anliegen der zweiten Steuerkante 18 an der Kante 21' verschließt. Der zweite radiale Auslass 7 hingegen ist komplett geöffnet und ermöglicht ein Strömen des über den Einlass 3 einströmenden Fluidstroms über den Wärmetauscher 19 zum Ausgang 5. Bei dieser Temperatur ist ein den Wärmetauscher 19 umgehender Teilstrom unerwünscht.

Mit dem erfindungsgemäßen Thermostatventil 1 mit seinem lediglich zwei Steuerkanten 17, 18 aufweisenden Schieber 4 kann ein konstruktiv einfach aufgebautes Thermostatventil 1 angeboten werden, welches zugleich einen vergleichsweise hohen Massenstrom für eine Bypassströmung bei gleichzeitig geringem Strömungswiderstand erlaubt. Bei den aus dem Stand der Technik bekannten Thermostatventilen unterliegt auch die Bypassströmung einem vergleichsweise hohen Strömungswiderstand, was aufgrund der dann erforderlichen hohen Pumpenleistung einen hohen Energiebedarf erfordert. Selbstverständlich kann das erfindungsgemäße Thermostatventil 1 nicht nur im Bereich einer Schmiermittelkühlung, sondern generell auch in anderen Bereichen von Kühlsystemen, insbesondere bei Kraftfahrzeugen, zur Anwendung kommen.

## Patentansprüche

1. Thermostatventil (1) für ein Kühlsystem einer Brennkraftmaschine, insbesondere in einem Kraftfahrzeug, mit einem Körper (2), der einen axialen Einlass (3) aufweist und einem in diesem Körper in Axialrichtung temperaturabhängig verstellbaren Schieber (4),
wobei
- der Körper (2) einen axialen Auslass (5) sowie einen ersten radialen Auslass (6) und einen axial dazu beabstandeten zweiten radialen Auslass (7) aufweist, die auf einer ersten Mantelhalbfläche (8) angeordnet sind,
- der Körper (2) eine auf der zweiten Mantelhalbfläche (9) liegende radiale Bypassöffnung (10) aufweist,
**dadurch gekennzeichnet,**
- **dass** der Körper (2) zwei Ringdichtungen (11,12) aufweist, zwischen welchen die beiden Auslässe (6,7) angeordnet sind,
- **dass** der Körper (2) zwei Axialdichtungen (13,14) aufweist, die in Axialrichtung entlang der Mantelfläche verlaufen und die beiden Mantelhalbflächen (8,9) gegeneinander und damit die Bypassöffnung (10) gegen die beiden Auslässe (6,7) abdichten.

2. Thermostatventil nach Anspruch 1,
**dadurch gekennzeichnet,**
**dass** eine Feder (15) und ein Wachsdehnelement (16) vorgesehen sind, zwischen welchen der Schieber (4) angeordnet ist.

3. Thermostatventil nach Anspruch 1 oder 2,
**dadurch gekennzeichnet,**
**dass** der Schieber (4) eine erste und eine zweite Steuerkante (17,18) aufweist, wovon die erste Steuerkante (17) den ersten radialen Auslass (6) und die zweite Steuerkante (18) den zweiten radialen Auslass (7) und die Bypassöffnung (10) öffnet bzw. schließt.

4. Thermostatventil nach Anspruch 3,
**dadurch gekennzeichnet,**
**dass** der die zweite Steuerkante (18) eine geringere Axialerstreckung aufweist als die Bypassöffnung (10), so dass die zweite Steuerkante (18) beim Überfahren der Bypassöffnung (10) eine Bypassströmung ermöglicht.

5. Thermostatventil nach einem der Ansprüche 1 bis 4,
**dadurch gekennzeichnet,**
**dass** der Schieber (4) bis zu einer Temperatur von ca. 90 °C den ersten Auslass (6) öffnet, den zweiten radialen Auslass (7) verschließt und eine Bypassströmung unterbindet.

6. Thermostatventil nach einem der Ansprüche 1 bis 5,
**dadurch gekennzeichnet,**
**dass** der Schieber (4) bei einer Temperatur von ca. 90 - 100 °C den ersten Auslass (6) teilweise öffnet, den zweiten radialen Auslass (7) verschließt, eine Bypassströmung ermöglicht.

7. Thermostatventil nach einem der Ansprüche 1 bis 6,
**dadurch gekennzeichnet,**
**dass** der Schieber (4) bei einer Temperatur von ca. 100 - 120 °C den ersten und zweiten radialen Auslass (6,7) verschließt und eine Bypassströmung ermöglicht.

8. Thermostatventil nach einem der Ansprüche 1 bis 7,
**dadurch gekennzeichnet,**
**dass** der Schieber (4) bei einer Temperatur von ca. 120 - 130 °C den ersten radialen Auslass (6) schließt, den zweiten radialen Auslass (7) öffnet und eine Bypassströmung ermöglicht.

9. Thermostatventil nach einem der Ansprüche 1 bis 8,
**dadurch gekennzeichnet,**
**dass** der Schieber (4) bei einer Temperatur von über 130 °C den ersten Auslass (6) schließt, den zweiten radialen Auslass (7) öffnet und eine Bypassströmung unterbindet.

10. Kühlsystem mit einem Thermostatventil (1) nach einem der Ansprüche 1 bis 9,
**dadurch gekennzeichnet,**
**dass** der erste und zweite radiale Auslass (6,7) mit einem Wärmetauscher (19) und der axiale Auslass (5) mit einem Kühlmittelreservoir verbunden sind.

11. Kühlsystem nach Anspruch 10,
**dadurch gekennzeichnet,**
**dass** der Wärmetauscher (19) als Ölkühler/Ölheizer ausgebildet ist.

## Claims

1. A thermostatic valve (1) for a cooling system of an internal combustion engine, in particular in a motor vehicle, comprising a body (2) that has an axial inlet (3) and a slide valve (4) that is displaceable in this body in the axial direction depending on the temperature,
wherein
- the body (2) has an axial outlet (5) and also a first radial outlet (6) and a second radial outlet (7) spaced apart therefrom, which are arranged on a first semi-shell surface (8),
- the body (2) has a radial bypass opening (10) located on the second semi-shell surface (9),
**characterized in**
- **that** the body (2) has two ring seals (11, 12) between which the two outlets (6, 7) are arranged,
- **that** the body (2) has two axial seals (13, 14) which run in the axial direction along the shell surface and seal the two semi-shell surfaces (8, 9) with respect to each other and thus seal the bypass opening (10) with respect to the two outlets (6, 7).

2. The thermostatic valve according to claim 1,
**characterized in**
**that** a spring (15) and a wax element (16) are provided between which the slide valve (4) is arranged.

3. The thermostatic valve according to claim 1 or claim 2,
**characterized in**
**that** the slide valve (4) has a first and a second control edge (17, 18) of which the first control edge (17) opens or closes the first radial outlet (6), and the second control edge (18) opens or closes the second radial outlet (7) and the bypass opening (10).

4. The thermostatic valve according to claim 3,
**characterized in**
**that** the second control edge (18) has a shorter axial extent than the bypass opening (10) so that the second control edge (18), when moving over the bypass opening (10), enables a bypass flow.

5. The thermostatic valve according to any one of the claims 1 to 4,
**characterized in**
**that** up to a temperature of ca. 90 °C, the slide valve (4) opens the first outlet (6), closes the second radial outlet (7) and disables a bypass flow.

6. The thermostatic valve according to any one of the claims 1 to 5,
**characterized in**
**that** at a temperature of ca. 90 - 100 °C, the slide valve (4) partially opens the first outlet (6), closes the second outlet (7) and enables a bypass flow.

7. The thermostatic valve according to any one of the claims 1 to 6,
**characterized in**
**that** at a temperature of ca. 100 - 120 °C, the slide valve (4) closes the first and the second outlets (6, 7) and enables a bypass flow.

8. The thermostatic valve according to any one of the claims 1 to 7,
**characterized in**
**that** at a temperature of ca. 120 - 130 °C, the slide valve (4) closes the first radial outlet (6), opens the second radial outlet (7) and enables a bypass flow.

9. The thermostatic valve according to any one of the claims 1 to 8,
**characterized in**
**that** at a temperature of more than 130 °C, the slide valve (4) closes the first outlet (6), opens the second radial outlet (7) and disables a bypass flow.

10. A cooling system comprising a thermostatic valve (1) according to any one of the claims 1 to 9,
**characterized in**
**that** the first and the second radial outlets (6, 7) are connected to a heat exchanger (19), and the axial outlet (5) is connected to a coolant reservoir.

11. The cooling system according to claim 10,
**characterized in**
**that** the heat exchanger (19) is formed as an oil cooler/oil heater.

## Revendications

1. Soupape thermostatique (1) pour un système de refroidissement d'un moteur à combustion interne, notamment dans un véhicule automobile, comportant un corps (2), qui présente une admission axiale (3) et un élément coulissant (4) déplaçable dans ce corps dans la direction axiale en fonction de la température,
dans laquelle :
le corps (2) présente un échappement axial (5) ainsi qu'un premier échappement radial (6) et un deuxième échappement radial (7) espacé de celui-ci, qui sont disposés sur une première demi-surface de gaine (8),
le corps (2) présente une deuxième ouverture de dérivation (10) radiale située sur la deuxième demi-surface de gaine (9),
**caractérisée en ce que**
le corps (2) présente deux joints d'étanchéité annulaires (11, 12), entre lesquels les deux échappements (6, 7) sont disposés,
le corps (2) présente deux joints d'étanchéité axiaux (13, 14), qui s'étendent dans la direction axiale le long de la surface de gaine et les deux demi-surfaces de gaine (8, 9) butent l'une contre l'autre et étanchéifient ainsi l'ouverture de dérivation (10) contre les deux échappements (6, 7).

2. Soupape thermostatique selon la revendication 1,
**caractérisée en ce que**
un ressort (15) et un élément de dilatation an cire (16) sont prévus, entre lesquels l'élément coulissant (4) est disposé.

3. Soupape thermostatique selon les revendications 1 ou 2,
**caractérisée en ce que**
l'élément coulissant (4) présente une première et une deuxième arête de commande (17, 18), desquelles la première arête de commande (17) ouvre ou ferme le premier échappement radial (6) et la deuxième arête de commande (18) ouvre ou ferme le deuxième échappement radial (7) et l'ouverture de dérivation (10).

4. Soupape thermostatique selon la revendication 3,
**caractérisée en ce que**
la deuxième arête de commande (18) présente une extension axiale moindre que l'ouverture de dérivation (10), de sorte que la deuxième arête de commande (18) permettre un écoulement de dérivation lors du passage sur l'ouverture de dérivation (10).

5. Soupape thermostatique selon une des revendications 1 à 4,
**caractérisée en ce que**
l'élément coulissant (4) jusqu'à une température d'environ 90°C ouvre le premier échappement (6), ferme le deuxième échappement radial (7) et empêche un écoulement de dérivation.

6. Soupape thermostatique selon une des revendications 1 à 5,
**caractérisée en ce que**
l'élément coulissant (4) à une température d'environ 90-100°C ouvre partiellement le premier échappement (6), ferme le deuxième échappement radial (7), permet un écoulement de dérivation.

7. Soupape thermostatique selon une des revendications 1 à 6,
**caractérisée en ce que**
l'élément coulissant (4) à une température d'environ 100-120°C ferme le premier et le deuxième échappement radial (6, 7) et permet un écoulement de dérivation.

8. Soupape thermostatique selon une des revendications 1 à 7,
**caractérisé en ce que**
l'élément coulissant (4) à une température d'environ 120-130°C ferme le premier échappement radial (6), ouvre le deuxième échappement radial (7) et permet un écoulement de dérivation.

9. Soupape thermostatique selon une des revendications 1 à 8,
**caractérisée en ce que**
l'élément coulissant (4) à une température de plus de 130°C ferme le premier échappement (6), ouvre le deuxième échappement radial (7) et empêche un écoulement de dérivation.

10. Système de refroidissement comportant une soupape thermostatique (1) selon une des revendications 1 à 9,
**caractérisée en ce que**
le premier et le deuxième échappement radial (6, 7) sont reliés à un échangeur thermique (19) et l'échappement axial (5) est relié à un réservoir de liquide de refroidissement.

11. Système de refroidissement selon la revendication 10,
**caractérisé en ce que**
l'échangeur thermique (19) est conçu comme un refroidisseur d'huile/chauffeur d'huile.
